# EUROPÄISCHE PATENTSCHRIFT

(11) **EP 1 678 020 B1**
(45) Veröffentlichungstag und Bekanntmachung des Hinweises auf die Patenterteilung: **14.03.2012**
(21) Anmeldenummer: 04790196.2
(22) Anmeldetag: 08.10.2004
(51) Int. Cl.: B60T 8/32, G01P 3/44, G01P 1/02, G01P 3/36, G01P 3/481, F16D 55/22, F16D 65/14

(54) **SCHEIBENBREMSE**
DISK BRAKE
FREIN A DISQUE

(30) Priorität: 23.10.2003 DE 10349303
(43) Veröffentlichungstag der Anmeldung: 12.07.2006
(73) Patentinhaber: KNORR-BREMSE Systeme für Nutzfahrzeuge GmbH, 80809 München (DE)
(72) Erfinder: BAUMGARTNER, Johann, 85368 Moosburg (DE); GSCHOSSMANN, Günther, 84539 Ampfing (DE)
(74) Vertreter: Mattusch, Gundula
(86) Internationale Anmeldenummer: PCT/EP2004/011246
(87) Internationale Veröffentlichungsnummer: WO 2005/042323

(56) Entgegenhaltungen:
- EP-A- 0 666 478
- DE-A1- 10 207 011
- US-A- 5 998 987
- US-A1- 2003 179 967

## Beschreibung

Die vorliegende Erfindung betrifft eine Scheibenbremse, insbesondere für Nutzfahrzeuge, nach dem Oberbegriff des Anspruches 1.

Es gibt Bremsenregelungssysteme für Scheibenbremsen, mit denen der Raddrehwinkel und die Raddrehzahl über elektrische Signalimpulse erfasst werden. Dabei ist meist an einem Teil des Fahrzeugrades ein sogenanntes Polrad angebracht, welches über in vorgegebenen Winkelinterwallen wechselnde magnetische Eigenschaften verfügt. An diesem bei bewegten Fahrzeug umlaufenden Polrad ist ein achsfester Sensor so angeordnet, dass der Wechsel der magnetischen Zustände des vorbeibewegten Polrades im Sensor auswertbare elektrische Impulse hervorruft, die über eine Leitungsverbindung an ein auswertendes elektronisches Gerät weitergeleitet werden. Die vorbekannten Bremsenregelungssysteme weisen den Nachteil auf, dass die Sensoren wegen der Umgebungsbeanspruchung häufig Störungen unterliegen. Da mit der Radnabe zwangsläufig auch der Bremsrotor der Radbremse verbunden ist, ergibt sich am Einbauort des Sensors eine hohe thermische Belastung, die bis zum Schmelzen der Kunststoffgehäuse der Sensoren und zum Verschmoren der das Signal weiterleitenden Kabel führen kann. Infolge dieser hohen Wärmeeinwirkung werden die empfindlichen inneren Bauelemente des Sensors beschädigt, was schließlich einen Funktionsausfall zur Folge haben kann. Für eine erhöhte Sicherheit müssen daher in aufwendiger Weise besonders hitzebeständige Materialien eingesetzt werden.

Die gattungsgemäße DE 44 02 959 zeigt eine Scheibenbremse mit einer Vorrichtung zur Impulserzeugung an Fahrzeugrädern, bei der ein Polring an einer Bremsscheibe angeordnet ist. Benachbart zu dem Polring ist ein Sensor vorgesehen, mittels dem die Raddrehzahl erfasst werden kann. Durch die Anordnung unmittelbar benachbart zu der Bremsscheibe ist der Sensor erhöhten Belastungen ausgesetzt.

Ferner ist aus der DE 102 07 011 A1 ein Sensor zur Drehzahlerfassung an einer Achse eines Kraftfahrzeuges vorgesehen, bei dem der Sensor in einer axial verlaufenden Öffnung im Achszapfen befestigt ist. Dadurch lässt sich der Sensor weitgehend geschützt anordnen, wobei die Montage und Herstellung vergleichsweise aufwendig ist.

Dokument US 5 998 987 A offenbart eine Scheibenbremse gemäß dem Oberbegriff des Anspruchs 1.

Es ist daher Aufgabe der vorliegenden Erfindung eine Scheibenbremse, insbesondere für Nutzfahrzeuge zu schaffen, die eine zuverlässige Erfassung der Drehzahl und des Drehwinkels ermöglicht, wobei die Umgebungseinflüsse die Funktion des Sensors nicht beeinflussen sollen.

Diese Aufgabe wird mit einer Scheibenbremse mit den Merkmalen des Anspruches 1 gelöst.

Erfindungsgemäß ist der Sensor zur Erfassung des Drehwinkels und der Drehzahl des Polrades entfernt von dem Polrad angeordnet und es ist mindestens eine Leitung zur Übertragung von Impulsen zwischen Sensor und Polrad geschaltet. Dadurch kann der Einbauort des für Umgebungseinflüsse sensiblen Sensors entfernt von dem Polrad angeordnet sein, sodass die am Polrad durch die Betätigung der Bremse auftretenden Hitzebelastungen am Sensor nicht mehr auftreten. Vielmehr kann der Sensor auch an einem geschützten Bereich angeordnet sein, wobei die Erfassung der Drehzahl und des Drehwinkels in an sich bekannter Weise erfolgen kann, da zwischen Polrad und Sensor mindestens eine Leitung zur Überbrückung des Abstandes zum Sensor geschaltet ist.

Für einen besonders guten Schutz der Leitung und des Sensors zur Erfassung des Drehwinkels und der Drehzahl ist zwischen der Leitung und dem Polrad eine Trennwand angeordnet. Dadurch wird auch vermieden, dass Schmutz die Erfassung über die Leitung und den Sensors beeinträchtigt. Vorzugsweise ist die Trennwand aus einem nicht magnetischen Trennblech gebildet, das die Erfassung der Signale nicht behindert und zusätzlich einen guten Wärmeleiter darstellt, sodass bei einer auftretenden Hitzebelastung diese schnell großflächig wieder abgeführt werden kann.

Gemäß einer bevorzugten Ausführungsform umfasst die Leitung zur Übertragung von Impulsen einen Weicheisenstab. Dadurch lassen sich auf einfache Weise die durch Magneten erzeugten Impulse weiterleiten, wobei der oder die Weicheisenstäbe hinsichtlich der auftretenden Temperaturunterschiede relativ unanfällig sind. Alternativ kann bei einem optischen Erfassungssystem ein entsprechender optischer Leiter zur Übertragung von Impulsen oder Lichtsignalen eingesetzt werden.

Für eine einfache Montage der Erfassungseinheit ist der Sensor an einer Leiterplatte montiert, die über die Demontage einer Abdeckung zugänglich ist. Dadurch kann bei einem Funktionsausfall auf einfache Weise die Leiterplatte und der Sensor bei Bedarf ausgewechselt werden. Für eine einfache Zugänglichkeit kann der Sensor benachbart zu der Zuspannvorrichtung auf der zu der Bremsscheibe abgewandten Seite des Bremssattels montiert sein.

Für einen einfachen Aufbau der Erfassungseinheit ist der Sensor aus einem Hall-Sensor und einem Dauermagneten gebildet, der dann mit einer entsprechenden Elektronik verbunden ist. Die erfindungsgemäße Scheibenbremse eignet sich besonders gut für Ausführungsbeispiele, bei denen eine Elektronik für die Steuerung und Regelung des Nachstellens aufgrund von Bremsbelagverschleiß vorgesehen ist. Denn viele elektrischen Bauteile könnten auf einer gemeinsamen Leiterplatte montiert sein. Dabei ist es möglich, die vorhandene Elektronik zur Auswertung der Sensorsignale zu verwenden und die Informationen den nachgeschalteten Elektroniken über einen gegebenenfalls vorhandenen Datenbus (z.B. CAN-Bus) zur Verfügung zu stellen.

Für die Erfassung können sowohl aktive als auch passive Sensoren eingesetzt werden, wobei die aktiven Sensoren mit einer elektrischen Spannungsquelle verbunden sind. Bei aktiven Sensoren kann der Magnetkreis auf zwei Leitungen aufgespalten werden, die den Magnetkreis jeweils getrennt zwischen Polrad und Sensor verbinden.

Die Erfindung wird nachfolgend anhand eines Ausführungsbeispieles mit Bezug auf die beigefügten Zeichnungen näher erläutert. Es zeigen:

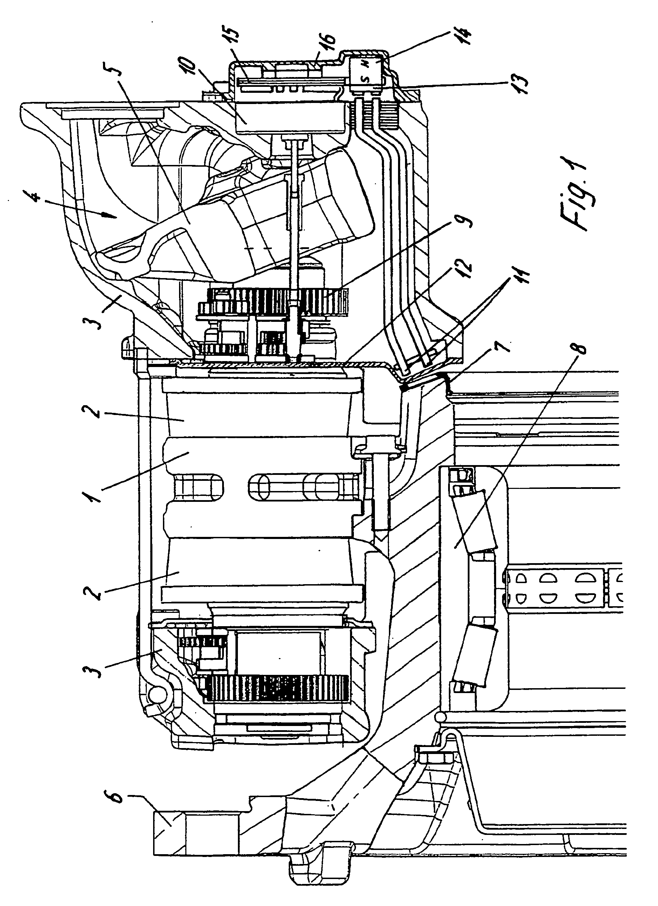

- Figur 1: eine geschnittene Ansicht durch ein Ausführungsbeispiel einer erfindungsgemäßen Scheibenbremse, und
- Figur 2: eine schematische Ansicht des Erfassungssystems der Figur 1.

Eine Scheibenbremse umfasst eine Bremsscheibe 1 die beidseitig von Bremsbelägen 2 umgeben sind. Die Bremsbeläge 2 können über eine Zuspannvorrichtung 4, die in an sich bekannter Weise über einen Bremshebel 5 betätigbar ist, gegen die Bremsscheibe 1 gedrückt werden. Die Zuspannvorrichtung 4 ist in einem Bremssattel 3 aufgenommen, der auch die Bremsscheibe 1 übergreift. Es ist möglich, dass der Bremssattel 3 beweglich oder ortsfest gelagert ist, um die erforderlichen Kräfte von der Zuspannvorrichtung 4 über die Bremsbeläge 2 auf die Bremsscheibe 1 zu übertragen.

Die Bremsscheibe 1 ist an einer Radnabe 6 montiert, die mit einer Felge verbindbar ist. Die Radnabe 6 ist um eine Achse über eine Lagerung 8 drehbar gelagert. An der Radnabe 6 ist ein Polrad 7 angeordnet, dass in vorgegebenen Winkelintervallen wechselnde magnetische Eigenschaften besitzt. Das Polrad 7 kann beispielsweise aus einem Ring aus Stahlblech gebildet sein, der in seiner Stirnfläche in bestimmten Winkelabständen Lücken aufweist, sodass magnetisierbare und nicht magnetisierbare Bereiche wechseln. Es ist auch möglich, als Polrad einen Ring einzusetzen, bei dem ein Wechsel von dauermagnetischen Bereichen und unmagnetisch bzw. weichmagnetischen Bereichen vorgesehen ist. Schließlich können als Polrad 7 auch statt magnetischer Impulse optische Impulse, beispielsweise durch Wechsel von hellen und dunklen Bereichen zur Erfassung des Drehwinkels und der Drehzahl bereitstellen.

In dem Bremssattel 3 ist zwischen Zuspannvorrichtung 4 und Bremsscheibe 1 ein Nachstellgetriebe 9 angeordnet, das über einen elektrischen Antrieb 10 betätigbar ist, damit ein Verschleiß der Bremsbeläge 2 über ein Nachstellen ausgeglichen werden kann. Die Nachstellvorrichtung kann entsprechend der deutschen Patentanmeldung 103 05 702.1 ausgebildet sein.

Zur Erfassung der Drehzahl bzw. des Drehwinkels sind zur Übertragung von Signalen zwei Weicheisenstäbe 11 in dem Bremssattel 3 aufgenommen, die von dem Polrad 7 durch eine Trennwand 12 aus einem Metallblech beabstandet sind. Die Trennwand 12 kann an dem Bremssattel 3 montiert sein und den Innenraum des Bremssattels 3 abdichten, um den Eintritt von Verunreinigungen in den Innenraum zu vermeiden. Dadurch sind auch die Weicheisenstäbe 11 geschützt angeordnet, die jedoch durch die Trennwand 12 hindurch Impulse von dem Polrad 7 empfangen können.

Die Weicheisenstäbe 11 sind durch den Bremssattel 3 auf die zur Bremsscheibe 1 abgewandten Seite geführt und dort mit einem Hall-Sensor 13 gekoppelt, der wiederum mit einem Dauermagneten 14 verbunden ist. Die so gebildete Sensoreinheit aus Hall-Sensor 13 und Dauermagnet 14 ist an einer Leiterplatte 15 festgelegt, die durch eine Abdeckung 16 geschützt angeordnet ist. Bei einer Fehlfunktion lässt sich die Abdeckung 16 demontieren und die Leiterplatte 15 sowie der Hall-Sensor 13 und der Dauermagnet 14 sind leicht zugänglich. Auf der Leiterplatte 15 kann ferner die Elektronik für die Nachstellvorrichtung angeordnet sein. Es muss somit für die Erfassung des Drehwinkels und der Drehzahl keine gesonderte Verkabelung zu dem Bremssattel 3 geführt werden. Auf der Leiterplatte 15 kann ferner die Elektronik für die Nachstellvorrichtung angeordnet sein. Es muss somit für die Erfassung des Drehwinkels und der Drehzahl keine gesonderte Verkabelung zu dem Bremssattel 3 geführt werden.

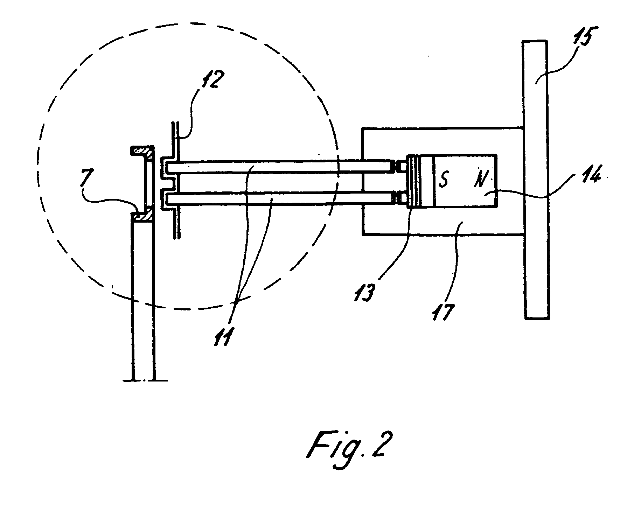

In Figur 2 ist der erfindungsgemäße Aufbau zur Erfassung der Drehzahl bzw. des Drehwinkels noch einmal schematisch dargestellt. Bei einem Drehen des Polrades 7 werden in den Weicheisenstäben 11 der Wechsel der magnetischen Zustände erfasst, wobei die Weicheisenstäbe 11 durch die Trennwand 12 geschützt angeordnet sind. Aus den magnetischen Impulsen werden über die Weicheisenstäbe 11, den Hall-Sensor 13 sowie den Dauermagneten 14 auswertbare elektrische Signale erzeugt, die an eine nicht dargestellte Steuerung über die Leiterplatte 15 weitergleitet werden. Die sensible Erfassungseinheit aus Hall-Sensor 13 und Dauermagnet 14 ist im Kunststoffgehäuse 17 aufgenommen, das beabstandet von dem Polrad 7 angeordnet ist. An dem Polrad 7 können durch Bremsbetätigungen Hitzebelastungen entstehen, die für die Sensoreinheit kritisch werden könnten. Die Anordnung der Sensoreinheit der der Bremsscheibe 1 abgewandten Seite des Bremssattels 3 gewährleistet, dass solche Hitzeeinwirkungen die Funktion der Drehzahl- bzw. Drehwinkelerfassung nicht beeinträchtigten.

In dem dargestellten Ausführungsbeispiel ist ein aktiver Sensor dargestellt, der mit einer elektrischen Spannungsquelle verbunden ist. Es ist auch möglich, passive Sensoren einzusetzen, die die Energie zur Bildung des Signals mittels elektromagnetischer Induktion in einer Magnetspule selbst erzeugen. Es können auch andere Sensoren, wie optische Sensoren eingesetzt werden, wobei dann statt der Weicheisenstäbe 11 optische Leitungen erforderlich sind und statt der Trennwand 12 aus Metallblech ein transparentes Material oder entsprechende Aussparungen erforderlich sind.

## Patentansprüche

1. Scheibenbremse, insbesondere für Nutzfahrzeuge, mit:
- einem eine Bremsscheibe (1) übergreifenden Bremssattel (3);
- einer im Bremssattel (3) angeordneten pneumatisch oder elektromotorisch betätigbaren Zuspannvorrichtung (4) zum Zuspannen der Bremse;
- einem mit der Bremsscheibe (1) drehenden Polrad (7), und
- einem ortsfesten Sensor (13) zur Erfassung des Drehwinkels und der Drehzahl des Polrades (7), wobei
der Sensor (13) entfernt von dem Polrad (7) angeordnet ist und mindestens eine Leitung (11) zur Übertragung von Impulsen zwischen Sensor (13) und Polrad (7) geschaltet ist **dadurch gekennzeichnet, dass** zwischen der Leitung (11) und dem Polrad (7) eine Trennwand (12) angeordnet ist.

2. Scheibenbremse nach Anspruch 1, **dadurch gekennzeichnet, dass** die Leitung (11) zur Übertragung von Impulsen einen Weicheisenstab umfasst.

3. Scheibenbremse nach Anspruch 1 oder 2, **dadurch gekennzeichnet, dass** die Trennwand (12) aus einem nicht magnetischen Trennblech gebildet ist.

4. Scheibenbremse nach einem der Ansprüche 1 bis 3, **dadurch gekennzeichnet, dass** der Sensor (13) an einer Leiterplatte (15) montiert ist, die über die Demontage einer Abdeckung (16) zugänglich ist.

5. Scheibenbremse nach einem der Ansprüche 1 bis 4, **dadurch gekennzeichnet, dass** der Sensor (13) ein Dauermagneten (14) umfasst.

6. Scheibenbremse nach einem der Ansprüche 1 bis 5, **dadurch gekennzeichnet, dass** der Sensor (13) benachbart der Zuspannvorrichtung (4) auf der zur Bremsscheibe (1) abgewandten Seite des Bremssattels (3) montiert ist.

7. Scheibenbremse nach einem der Ansprüche 1 bis 6, **dadurch gekennzeichnet, dass** der Sensor (13) als aktiver Sensor mit zwei Leitungen (11) zur Übertragung von Impulsen ausgebildet ist.

8. Scheibenbremse nach einem der Ansprüche 1 bis 7, **dadurch gekennzeichnet, dass** die Scheibenbremse eine Elektronik für die Steuerung und Regelung des Nachstellens aufgrund von Bremsbelagverschleiß aufweist.

## Claims

1. Disc brake, in particular for commercial vehicles, comprising:
- a brake calliper (3) which encompasses a brake disc (1);
- a pneumatically or electromotively actuable application device (4), arranged in the brake calliper (3), for applying the brake;
- a magnet wheel (7) which rotates with the brake disc (1), and
- a positionally fixed sensor (13) for measuring the rotational angle and the rotational speed of the magnet wheel (7), wherein
the sensor (13) is arranged at a distance from the magnet wheel (7), and at least one line (11) for transmitting pulses is connected between the sensor (13) and the magnet wheel (7),
**characterised in that**
a separating wall (12) is arranged between the line (11) and the magnet wheel (7).

2. Disc brake according to claim 1, **characterised in that** the line (11) for transmitting pulses comprises a soft iron rod.

3. Disc brake according to claim 1 or 2, **characterised in that** the separating wall (12) is formed from a non-magnetic metal separating plate.

4. Disc brake according to any of claims 1 to 3, **characterised in that** the sensor (13) is mounted on a printed circuit board (15) which can be accessed by removing a cover (16).

5. Disc brake according to any of claims 1 to 4, **characterised in that** the sensor (13) comprises a permanent magnet (14).

6. Disc brake according to any of claims 1 to 5, **characterised in that** the sensor (13) is mounted adjacent to the application device (4), on that side of the brake calliper (3) which faces away from the brake disc (1).

7. Disc brake according to any of claims 1 to 6, **characterised in that** the sensor (13) is embodied as an active sensor with two lines (11) for transmitting pulses.

8. Disc brake according to any of claims 1 to 7, **characterised in that** the disc brake has an electronic circuit for the open-loop and closed-loop control of the readjustment necessitated by brake pad wear.

## Revendications

1. Frein à disque, en particulier pour des véhicules utilitaires, comprenant
- un étrier de frein (3) chevauchant un disque de frein (1),
- un dispositif de serrage (4) à serrer le frein, qui est disposé dans ledit étrier de frein (3) et est commandable par voie pneumatique ou électromotrice,
- un rotor (7) tournant avec ledit disque de frein (1), et
- un détecteur (13) stationnaire pour la détection de l'angle de rotation et la vitesse dudit rotor (7), dans lequel
- ledit détecteur (13) est disposé à une distance dudit rotor (7) et au moins une ligne électrique est connectée pour la transmission des impulsions entre ledit détecteur (13) et ledit rotor (7),
**caractérisé en ce**
**qu'**une cloison de séparation (12) est disposée entre ladite ligne électrique (11) et ledit rotor (7).

2. Frein à disque selon la revendication 1, **caractérisé en ce que** ladite ligne électrique (11) pour la transmission des impulsions comprend une baguette en fer doux.

3. Frein à disque selon la revendication 1 ou 2, **caractérisé en ce que** ladite cloison de séparation (12) est formée d'une tôle séparatrice non magnétique.

4. Frein à disque selon une quelconque des revendications 1 à 3, **caractérisé en ce que** ledit détecteur (13) est monté à une plaquette à circuits imprimés (15), qui est accessible par le démontage d'un recouvrement (16).

5. Frein à disque selon une quelconque des revendications 1 à 4, **caractérisé en ce que** ledit détecteur (13) comprend un aimant permanent.

6. Frein à disque selon une quelconque des revendications 1 à 5, **caractérisé en ce que** ledit détecteur (13) est monté au voisinage dudit dispositif de serrage de frein (4) du côté dudit étrier de frein (3), qui est opposé audit disque de frein (1).

7. Frein à disque selon une quelconque des revendications 1 à 6, **caractérisé en ce que** ledit détecteur (13) est conçu sous forme d'un détecteur actif à deux lignes électriques (11) pour la transmission des impulsions.

8. Frein à disque selon une quelconque des revendications 1 à 7, **caractérisé en ce que** le frein à disque comprend un système électronique pour la commande et le réglage du rattrapage en vertu de l'usure à la garniture du frein.
